# EUROPÄISCHE PATENTSCHRIFT

(11) **EP 2 640 623 B1**
(45) Veröffentlichungstag und Bekanntmachung des Hinweises auf die Patenterteilung: **11.05.2016**
(21) Anmeldenummer: 11791206.3
(22) Anmeldetag: 16.11.2011
(51) Int. Cl.: B62D 3/12, F16H 55/28, F16H 19/04

(54) **ROLLENGELAGERTE ZAHNSTANGENFÜHRUNG**
ROLLER-MOUNTED RACK AND PINION DRIVE
GUIDE DE CRÉMAILLÈRE MONTÉ SUR GALETS

(30) Priorität: 19.11.2010 DE 102010051728
(43) Veröffentlichungstag der Anmeldung: 25.09.2013
(73) Patentinhaber: ThyssenKrupp Presta AG, 9492 Eschen (LI)
(72) Erfinder: ROMBOLD, Manfred, 71364 Winnenden (DE); LUBOJATZKY, Thomas, 70565 Stuttgart (DE)
(74) Vertreter: LENZING GERBER
(86) Internationale Anmeldenummer: PCT/EP2011/005763
(87) Internationale Veröffentlichungsnummer: WO 2012/065722

(56) Entgegenhaltungen:
- GB-A- 2 411 874
- JP-U- H0 181 373
- US-A- 4 215 591

## Beschreibung

Die vorliegende Erfindung betrifft eine Zahnstangenlenkung für Kraftfahrzeuge mit den Merkmalen des Oberbegriffs des Anspruchs 1.

Zahnstangenlenkungen weisen ganz allgemein ein Lenkungsgehäuse auf, in dem eine Zahnstange in einer Axialrichtung längs verschieblich gelagert ist. Die Zahnstange weist ein Verzahnungssegment auf, das mit der Verzahnung eines Lenkritzels im Eingriff steht. An den freien Enden der Zahnstange sind Spurstangen befestigt, die mit den lenkbaren Achsschenkeln und Rädern der betreffenden Achse in Verbindung stehen. Auf die Zahnstange wirken Kräfte und Momente. Ein von dem Fahrer über eine Lenkwelle in das Lenkritzel eingeleitetes Drehmoment bewirkt eine Kraft auf die Zahnstange in Axialrichtung. Diese Kraft wird dann zum Verschwenken der gelenkten Räder genutzt. Die Flanken der Verzahnung erzeugen weiter eine Kraft, die im Wesentlichen senkrecht zu der Ebene der Zahnstangenverzahnung wirkt und die die beiden Verzahnungskomponenten auseinander drängt. Die Spurstangen greifen in einem Winkel gegenüber der Axialrichtung an der Zahnstange an. Rückwirkende Kräfte, die von den Rädern auf die Lenkung wirken, führen dann zu Biegemomenten, die auf die Zahnstange wirken. Schließlich können auch Drehmomente um die Längsachse der Zahnstange wirken, die eine Verdrehung innerhalb der Verzahnung verursachen können.

Es gibt verschiedene konstruktive Lösungen, die unerwünschten Wirkungen der oben beschriebenen Kräfte aufzufangen. Die senkrecht zu der Verzahnungsebene auftretende Kraft, die von dem Eingriff des Ritzels in das Zahnsegment herrührt, wird durch ein Druckstück aufgefangen, welches die Zahnstange gegen das Ritzel drückt. Solche Druckstücke können mit einer gleitmindernden Beschichtung oder Auflage versehen sein, um die Reibung innerhalb der Lenkung gering zu halten. Es sind insbesondere auch Lösungen bekannt, beispielsweise aus dem Patent US 5.983.742, in denen Rollen zur Abstützung der Zahnstange eingesetzt werden. Die Rollen sind mit Ihrer Lagerachse parallel zu der Ebene des Zahnsegments angeordnet. Drehmomente um die Längsachse der Zahnstange können mit dieser Anordnung nicht aufgefangen werden. Es sind auch Zahnstangen bekannt, die ein dreieckiges oder Y-förmiges Profil aufweisen. Ein dreieckiges Zahnstangenprofil ist aus dem Patent US 4.215.591 bekannt. Hier wird die Zahnstange durch eine Rolle mit parallel zu dem Zahnsegment ausgerichteter Lagerachse in die Verzahnung gedrängt. Drehmomente um die Längsachse der Zahnstange werden durch keilförmige Stützelemente kompensiert. Die Stützelemente erzeugen Reibung im Bereich der entsprechenden Anlageflächen der Zahnstange.

Die Patentschrift EP 0 463 891 B1 zeigt eine Lenkung mit Y-förmiger Zahnstange, die in einem von dem Zahnsegment abgewandten Rückseitenbereich über Rollen mit schräg zu der Flächennormalen des Zahnsegments ausgerichteten Lagerachsen abgestützt ist. Die Rollen sind in Tragelementen gelagert, die über eine Druckfeder auseinander gedrängt werden. In dem zylindrischen Gehäuse, in dem die Tragelemente gelagert sind, wird dadurch eine Hebelwirkung erzeugt, die die Zahnstange in den Eingriff mit dem Lenkritzel drängt. Eine Drehmomentabstützung bezüglich Drehmomenten um die Längsachse der Zahnstange wird mit dieser Anordnung nicht wirksam erzielt.

Der nächstkommende Stand der Technik ist in der Offenlegungsschrift GB 2 411 874 A dargestellt. Dort ist eine Lenkung mit Zahnstange gezeigt, die ebenfalls in einem von dem Zahnsegment abgewandten Rückseitenbereich über Rollen abgestützt ist, die mit Ihrer Drehachse unter einem Winkel von 45° zur Flächennormalen des Zahnsegments der Zahnstange angeordnet sind.

Keine der vorgenannten technischen Lösungen ermöglicht es, Verbiegungen der Zahnstange durch nicht achsparallel eingeleitete Rückwirkungskräfte aus den Spurstangen aufzufangen.

Es ist daher Aufgabe der vorliegenden Erfindung, eine Zahnstangenlenkung für Kraftfahrzeuge zu schaffen, bei der eine reibungsarme Führung der Zahnstange im Bereich des Verzahnungseingriffs, eine Drehmomentabstützung bezüglich Drehmomenten die Längsachse der Zahnstange und eine Abstützung gegenüber Biegekräften ermöglicht.

Diese Aufgabe wird von einer Zahnstangenlenkung mit den Merkmalen des Anspruchs 1 gelöst.

Weil die Zahnstange zwei Führungsflächen aufweist, die im wesentlichen eben sind und die in einem spitzen Winkel zu der Flächennormalen des Zahnsegments ausgerichtet sind, und weil an beiden Seiten der Zahnstange Führungsrollen vorgesehen sind, die in Anlage mit den Führungsflächen liegen, wobei die Drehachsen der Führungsrollen in einem Winkel von 0-20 Grad gegenüber der Flächennormalen auf das Zahnsegment ausgerichtet sind, wird die Zahnstange in den Eingriff mit dem Lenkritzel gedrängt. Gleichzeitig wird eine Bewegung der Zahnstange quer zu der Längsachse, wie sie durch Biegekräfte entsteht, aufgefangen. Die minimalen Bewegungen der Zahnstange in ihrer Höhenachse, die insbesondere bei der Drehsinnänderung des Ritzels durch den Flankenwechsel der Verzahnungsgeometrie entstehen, werden deutlich reduziert. Die nahezu parallel zu der Flächennormalen orientierten ebenen Flächen der Zahnstange ermöglichen weiter aufgrund ihrer Höhe in Richtung der Flächennormalen eine Abstützung der Zahnstange gegenüber Drehmomenten, die um die Längsachse der Zahnstange wirken. Durch diese Anordnung wird erreicht, dass die Lagerrollen unter Ausschluss einer Gleitreibung sowohl die auftretenden Kräfte in Richtung der Flächennormalen, quer zur Flächennormalen und zur Längsrichtung sowie das auftretende Drehmoment um die Längsachse der Zahnstange aufnehmen können. Es wird eine besonders belastbare und dabei reibungsarme Führung der Zahnstange erzielt. Die Zahnstange kann dabei auch in Längsrichtung in einem Abstand von dem Verzahnungseingriff geführt sein, so dass der erforderliche Bauraum im unmittelbaren Bereich des Lenkritzels reduziert wird. Weiter kann eine Einstellung der Führung vorgenommen werden, wenn die Lagerrollen als Kegelrollen ausgeführt sind und die Lagerachsen in ihrer Position einstellbar sind. Vorzugsweise sind die Lagerachsen über ein Schraubgewinde in Achsrichtung positionierbar, wobei die Kegelrollen über Anlaufscheiben axial abgestützt sind. Die Anlaufscheiben können zusätzlich mit Federmitteln versehen werden, die die Rollen in Axialrichtung vorspannen, so dass diese Rollen gegen die entsprechenden Führungsflächen der Zahnstange gedrängt werden.

Als Flächennormale ist dabei die Senkrechte auf eine ebene Fläche zu verstehen, die die Köpfe der einzelnen Zähne des Zahnsegments miteinander verbindet.

Vorzugsweise werden drei Führungsrollen eingesetzt, wobei zwei Führungsrollen einander gegenüber liegend angeordnet sind und eine weitere Führungsrolle an einer Seite der Zahnstange in einem Abstand bezüglich der Axialrichtung der Zahnstange vorgesehen ist. Diese dritte Führungsrolle kann zusätzlich Biegekräfte kompensieren.

In einer weiteren besonders vorteilhaften Ausführungsform werden zwei Führungsrollen eingesetzt, wobei zwei Führungsrollen einander gegenüber liegend angeordnet sind. Dabei wird die Lage der Führungsrollen anhand der in Versuchen ermittelten größten Biegebeanspruchung definiert.

In einer weiteren besonders vorteilhaften Ausführungsform werden zwei Führungsrollen in anderer Positionierung eingesetzt, wobei zwei Führungsrollen einander gegenüber liegend angeordnet sind und wobei das Lenkritzel zwischen den Rollen positioniert ist.

Die Aufnahme von Drehmomenten, die um die Längsachse der Zahnstange wirken, ist bei zwei gängigen Ausführungen von Zahnstangenlenkungen besonders vorteilhaft, nämlich einerseits bei Lenkungen mit einem Mittenabgriff, bei dem die Spurstangen außerhalb der Längsachse angebracht sind, und andererseits bei elektromechanischen Servolenkungen, bei denen die Hilfskraft über einen Spindeltrieb direkt in die Zahnstange eingeleitet wird. Beide Ausführungen neigen dazu, nennenswerte und entsprechend störende Drehmomente zu erzeugen.

Nachfolgend werden Ausführungsbeispiele der vorliegenden Erfindung anhand der Zeichnung näher beschrieben.

Es zeigen:
- Figur 1:: eine Zahnstangenlenkung im Bereich der Führungsrollen in einem Querschnitt;
- Figur 2:: einen Ausschnitt aus Fig. 1 in einer vergrößerten Darstellung;
- Figur 3:: eine schematische Darstellung einer Ausführungsform einer Zahnstangenlenkung mit drei Führungsrollen in einer Draufsicht;
- Figur 4:: eine schematische Darstellung einer Ausführungsform einer Zahnstangenlenkung mit vier Führungsrollen in einer Draufsicht;
- Figur 5:: eine schematische Darstellung einer anderen Ausführungsform einer Zahnstangenlenkung mit drei Führungsrollen in einer Draufsicht;
- Figur 6:: eine schematische Darstellung einer Ausführungsform einer Zahnstangenlenkung mit zwei Führungsrollen in einer Draufsicht;
- Figur 7:: eine schematische Darstellung einer anderen Ausführungsform einer Zahnstangenlenkung mit zwei Führungsrollen in einer Draufsicht;
- Figur 8:: eine schematische Darstellung einer dritten Ausführungsform einer Zahnstangenlenkung mit zwei Führungsrollen in einer Draufsicht; sowie
- Figur 9:: eine schematische Darstellung einer vierten Ausführungsform einer Zahnstangenlenkung mit Führungsrollen in einer Draufsicht.

### Figurenbeschreibung

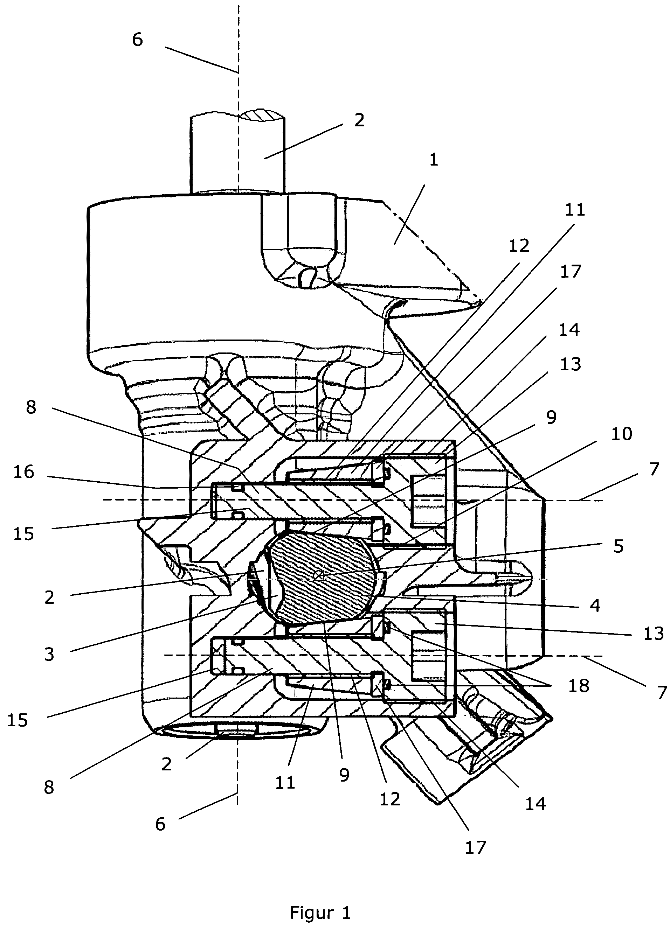

In der Figur 1 ist ein Lenkgetriebe mit einem Lenkungsgehäuse 1 in einem Querschnitt dargestellt. In dem Lenkungsgehäuse 1 ist eine Ritzelwelle 2 drehbar gelagert. Die Ritzelwelle 2 kämmt im Bereich einer Verzahnung 3 mit einer Zahnstange 4 und die Zahnstange 4 ist in Richtung einer Längsachse 5, die senkrecht auf der Zeichenebene steht, verschieblich in dem Lenkungsgehäuse 1 gelagert. Zur weiteren Beschreibung bietet es sich an, die Lage der einzelnen Bauelemente mit Bezug zu den Achsen zu beschreiben. Neben der Längsachse 5 ist eine Drehachse 6 des Lenkritzels 2 dargestellt, die in der Zeichenebene verläuft. Ebenfalls in der Zeichenebene verläuft eine Längsachse 7 von Lagerzapfen 8, wobei die Längsachse 7 senkrecht zu der Drehachse 6 und zu der Längsachse 5 verläuft.

Die Zahnstange 4 ist in dem dargestellten Bereich mit dem Zahnsegment 3 versehen, das an der dem Lenkritzel 2 zugewandten Seite der Zahnstange in bekannter Weise ausgebildet ist. Das Zahnsegment 3 stellt eine etwa ebene Fläche dar. Ausgehend von dem Zahnsegment 3 ist die Zahnstange 4 in Richtung ihres Umfangs mit zwei zueinander in spitzem Winkel geneigten Führungsflächen 9 versehen, die nach Art eines Trapezes im Anschluss an das Zahnsegment 3 aufeinander zu verlaufen. Die dem Zahnsegment 3 abgewandten Enden der Führungsflächen 9 sind über einen bogenförmigen Umfangsbereich 10 miteinander verbunden. Dieser Umfangsbereich kann auch eine beliebige andere Kontur aufweisen. Die Querschnittsgestalt der Zahnstange 4 in diesem Bereich entspricht etwa einem gleichschenkligen Trapez, bei dem die parallelen Seiten abgerundet und an einer Seite mit dem Zahnsegment 3 versehen worden sind.

Die Führung der Zahnstange 4 erfolgt in dem dargestellten Bereich einerseits durch den möglichst spielfreien Eingriff des Zahnsegments 3 in das Lenkritzel 2 und andererseits über zwei Kegelrollen 11, die an den Führungsflächen 9 anliegen. Die Kegelrollen 11 sind jeweils über eine Lagerbuchse 12 an je einem Lagerzapfen 8 gelagert. Die Lagerzapfen 8 wiederum sind als Schrauben ausgebildet, mit einem Schraubenkopf 13, der außen mit einem Gewinde 14 versehen und in das Lenkungsgehäuse 1 eingeschraubt ist. An ihren freien Enden sind die Lagerzapfen 8 im Wesentlichen spielfrei in Bohrungen 15 des Lenkungsgehäuses eingesetzt und mit jeweils einem Dichtring 16 versehen.

Die Kegelrollen 11 sind auf den Lagerzapfen 8 mittels der Lagerbuchsen 12 gelagert. Sie führen die Zahnstange 4 im Bereich der Führungsflächen 9. Um auch in Richtung der Achse 7 eine Kraft auf die Zahnstange 4 ausüben zu können, die die Zahnstange 4 dann in Eingriff mit dem Lenkritzel 2 drängt und um Kräfte auffangen zu können, die die Zahnstange 4 mit ihrem Zahnsegment 3 von dem Lenkritzel 2 weg drängen, sind in Axialrichtung zwischen den Kegelrollen 11 und den Schraubenköpfen 13 Anlaufscheiben 17 vorgesehen. Die Anlaufscheiben 17 nehmen die beschriebenen Kräfte auf. Bei diesem Ausführungsbeispiel sind die Anlaufscheiben 17 noch auf die Kegelrollen 11 vorgespannt und zwar durch Federn 18, die jeweils in einer Ausnehmung des Schraubenkopfs 13 liegen und die die Anlaufscheiben 17 von dem Schraubenkopf 13 weg gegen die Kegelrollen 11 drängen.

Ein Druckstück, das die Zahnstange bei herkömmlichen Kraftfahrzeuglenkungen gegen das Lenkritzel drückt, ist in dieser Lenkung nicht vorgesehen.

Zur Montage wird die Zahnstange 4 mit dem Lenkritzel 2 in Eingriff gebracht. Die Lagerzapfen 8 werden dann mit den Kegelrollen 11 und den Anlaufscheiben 17 bestückt und in die Bohrungen 15 eingeführt. Durch Betätigung der Schraubenköpfe 13 werden dann die Kegelrollen 11 so weit gegen die Zahnstange 4 gedrängt, bis sie spielfrei in Anlage mit den Führungsflächen 9 liegen und auch der Eingriff des Zahnsegments 3 in das Lenkritzel 2 spielfrei ist. Dabei ist die Einstellung so vorzunehmen, dass die Führung reibungsarm bleibt. Die Lage der Zahnstange in Richtung der Achse 6 kann durch unterschiedlich tiefes Einschrauben der Lagerzapfen 8 in die entsprechenden Bohrungen eingestellt werden. Nach der Spiel- und Lagereinstellung können die Schrauben über geeignete Maßnahmen gegen verdrehen gesichert werden.

Eine nicht dargestellte Ausführungsform sieht zur Lagerung der Kegelrollen vor, dass Gleitlagerbuchsen auf den Lagerzapfen 8 drehfest angeordnet sind und dass zwischen den Gleitlagerbuchsen und den Lagerzapfen 8 eine Dämpfungsschicht, z.B. eine Elastomerschicht angeordnet ist, die auf die Kegelrollen 11 wirkende Kräfte aufnehmen und abfedern kann. In dieser Ausführungsform kann auf die oben beschriebene axiale Anfederung der Kegelrollen 11 verzichtet werden. Die Ausführung ist zudem im Betrieb besonders geräuscharm.

Bei dem dargestellten Ausführungsbeispiel beträgt der Winkel der Oberfläche der Kegelrollen 11 gegen ihre Achse 7 etwa 7 Grad. Dementsprechend ist auch der Winkel der Führungsflächen 9 zu der Symmetrieebene der Zahnstange 4 mit 7 Grad gewählt. Die Oberfläche der Kegelrollen 11 kann abweichend von der streng geometrischen Kegelform auch leicht konvex ausgeführt sein, genauer gesagt kann die Erzeugende der Mantelfläche der Kegelrollen konvex gekrümmt sein, so dass sich nicht über die gesamte axiale Länge der Kegelrollen 11 eine linienförmige Anlage der Kegelrollen 11 an die Führungsflächen 9 ergibt. Alternativ können die Kegelrollen 11 mit streng kegelstumpfförmiger Geometrie ausgebildet sein, während die Führungsflächen 9 in dem Bereich, in dem die Kegelrollen 11 anliegen, leicht konvex ausgebildet sind. Diese Ausführungen verringern die gesamte Reibung der Lenkung, was die sich in einer verringerten Durchschiebekraft der Zahnstange äußert. Es verbessert sich auch das Ansprechverhalten, Lenkgefühl der Zahnstange beim Zurückfedern in Richtung des Lenkritzels 2. Die Auslegung der Rollengeometrie ist abhängig von unterschiedlichen Fahrzeugparametern, sowie von der Lenkungskinematik und der Verzahnungsgeometrie der Ritzel/ Zahnstangenverbindung, so dass der Winkel der Mantelfläche der Kegelrollen 11 bis zu 40 Grad betragen kann.

Die dargestellte Ausführungsform ist aufgrund der parallel zueinander ausgeführten Bohrungen 15 relativ einfach zu produzieren und andere Ausführungsformen können vorsehen, dass die Drehachsen der Kegelrollen 11 nicht parallel zueinander ausgerichtet sind, sondern ebenfalls in einem Winkel verlaufen, der etwa zwischen 0 und 20 Grad betragen kann. Auch der Kegelwinkel der Kegelrollen 11 kann je nach Anwendung andere Werte einnehmen. Diese Werte können etwa zwischen 3 und 40 Grad liegen.

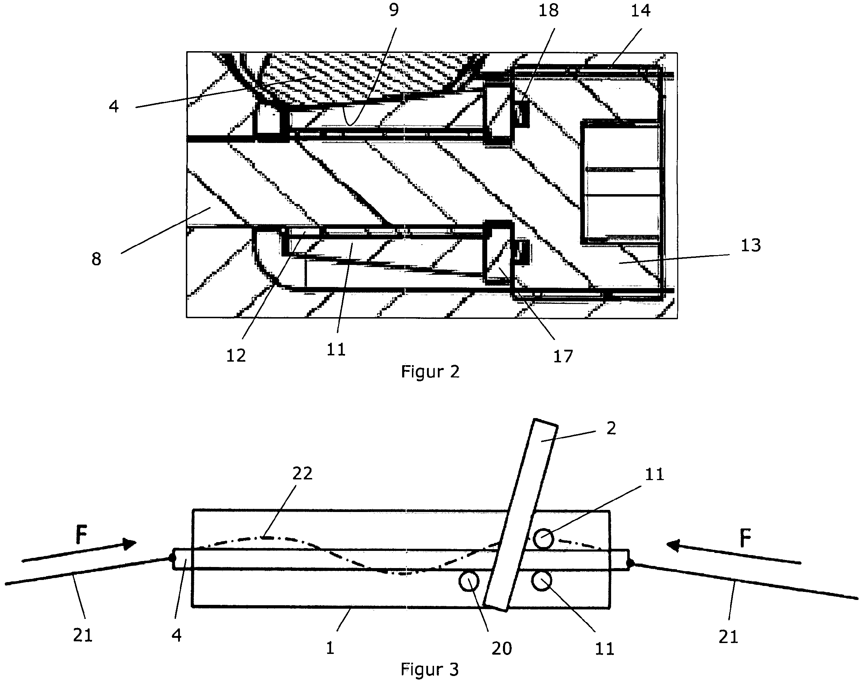

In der Figur 2 ist ein Bereich um eine Kegelrolle aus Fig. 1 vergrößert dargestellt.

In der Figur 3 ist eine schematische Lenkung in der Draufsicht dargestellt. Diese Darstellung dient zur Veranschaulichung der Kräfte, die auf das Lenkgetriebe wirken. Das Getriebegehäuse 1, das Lenkritzel 2 und die Zahnstange 4 sind nur schematisch dargestellt. Es ist ersichtlich, dass die Kegelrollen 11 neben dem Eingriff des Lenkritzels 2 in die Zahnstange 4 angeordnet sind. Eine dritte Kegelrolle 20 kann bezüglich des Lenkritzels 2 gegenüber den Kegelrollen 11 vorgesehen sein, um die Lagerung steifer zu gestalten.

Schematisch dargestellte Spurstangen 21 sind an den Enden der Zahnstange 4 angeordnet. Mit F sind Kräfte bezeichnet, die auf die Spurstangen 21 wirken. Diese Kräfte F bewirken eine Biegung der Zahnstange 4, wie sie mit der Strichpunktlinie 22 veranschaulicht ist. Die Biegung der Zahnstange 4 im Betrieb des Kraftfahrzeugs liegt im Bereich von einigen Hunderstel bis zu wenigen Zehntel Millimetern. Die Kegelrollen 11 und 20 sind dazu vorgesehen und geeignet, diese Biegungen besonders gut aufzunehmen und dabei die Gesamtreibung in dem Lenkgetriebe gering zu halten.

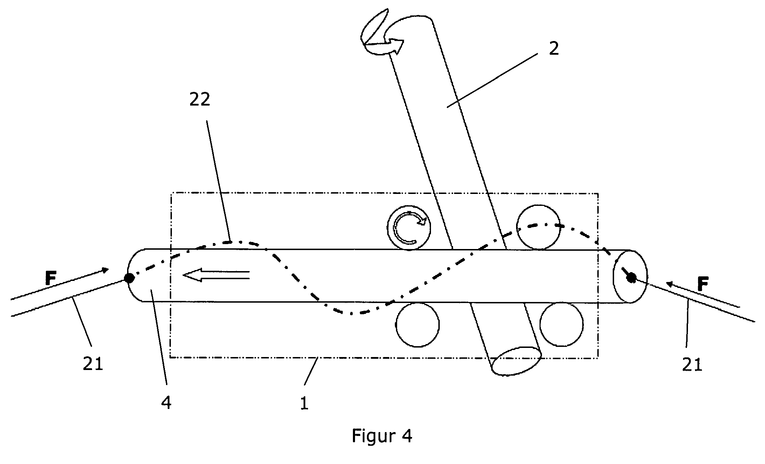

In der Figur 4 ist eine schematische Darstellung einer Ausführungsform einer Zahnstangenlenkung mit vier Führungsrollen in einer Draufsicht veranschaulicht. Diese Ausführung ermöglicht eine besonders steife Führung der Zahnstange 4.

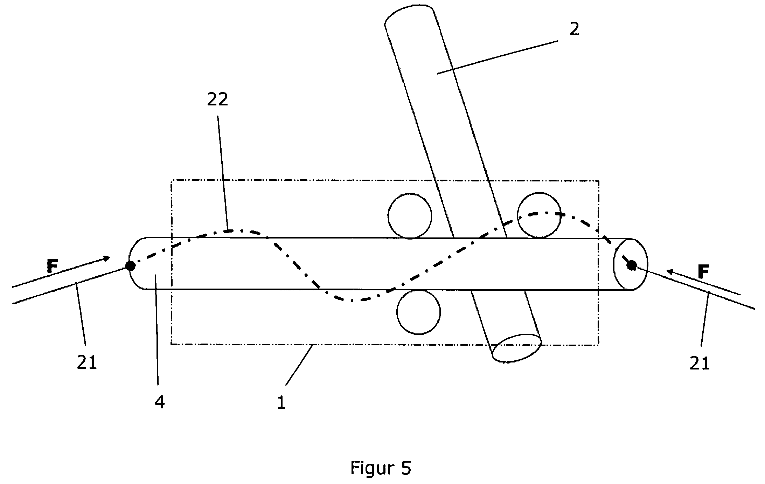

In der Figur 5 ist eine schematische Darstellung einer anderen Ausführungsform einer Zahnstangenlenkung mit drei Führungsrollen in einer Draufsicht veranschaulicht. Diese Ausführung ermöglicht eine Führung der im Bereich der zu erwartenden Auslenkungen bei bestimmten Achsgeometrien.

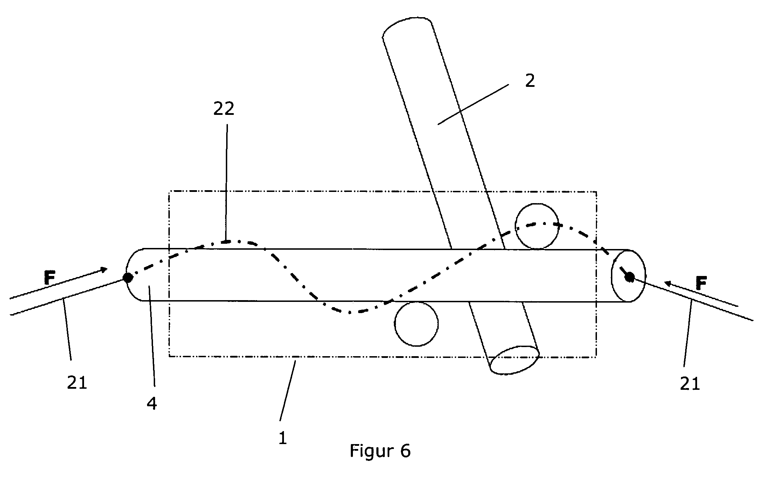

In der Figur 6 ist eine schematische Darstellung einer Ausführungsform einer Zahnstangenlenkung mit zwei Führungsrollen in einer Draufsicht veranschaulicht. Diese Ausführung ermöglicht eine besonders reibungsarme Führung der Zahnstange 4.

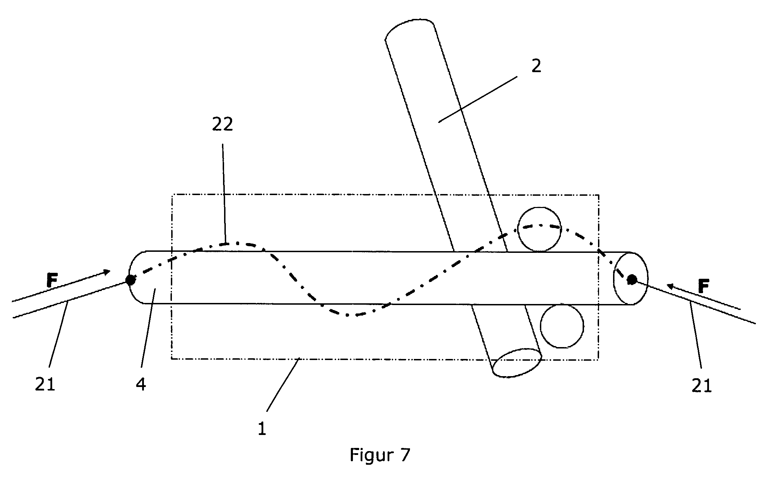

Die Figur 7 zeigt eine schematische Darstellung einer vierten Ausführungsform einer Zahnstangenlenkung mit Führungsrollen in einer Draufsicht. Diese Ausführung ermöglicht eine besonders reibungsarme Führung der Zahnstange 4 im Bereich des freien Endes des Lenkungsgehäuses.

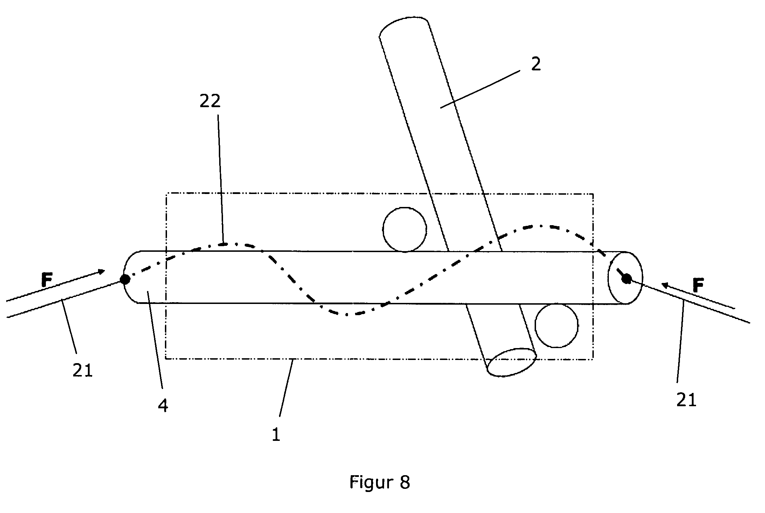

Die Figur 8 zeigt eine schematische Darstellung einer vierten Ausführungsform einer Zahnstangenlenkung mit Führungsrollen in einer Draufsicht. Diese Ausführung ermöglicht eine besonders reibungsarme Führung der Zahnstange 4 und eine Anpassung an eingeschränkten Bauraum.

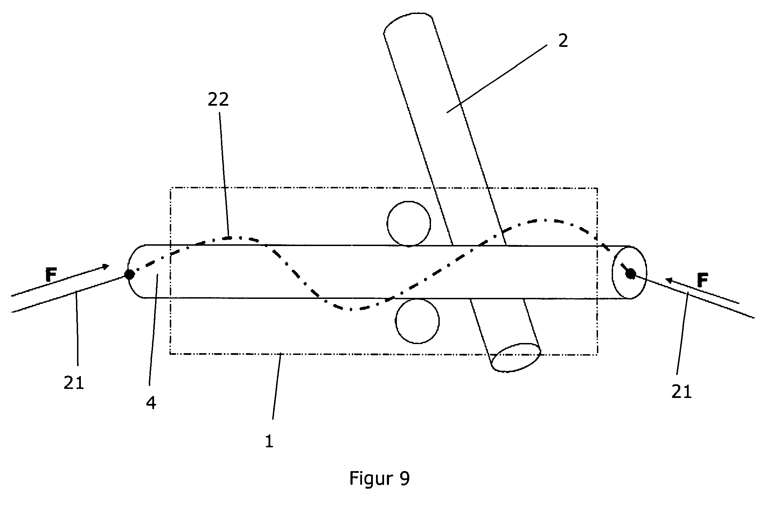

Die Figur 9 zeigt eine schematische Darstellung einer vierten Ausführungsform einer Zahnstangenlenkung mit Führungsrollen in einer Draufsicht. Diese Ausführung ermöglicht eine besonders steife Führung der Zahnstange 4. Diese Ausführung ermöglicht eine besonders reibungsarme Führung der Zahnstange 4 bei weiterer Anpassung an beschränkte Platzverhältnisse im Bereich des freien Endes des Lenkungsgehäuses.

## Patentansprüche

1. Zahnstangenlenkung für ein Kraftfahrzeug, mit einem Lenkungsgehäuse (1), in dem ein Lenkritzel (2) drehbar gelagert ist und mit einem Zahnsegment (3) einer in Richtung einer Längsachse (5) in dem Lenkungsgehäuse (1) verschieblich gelagerten Zahnstange (4) in Eingriff steht, wobei das Zahnsegment (3) mit seiner dem Lenkritzel (2) zugewandten Oberseite eine ebene Fläche bildet, wobei die Zahnstange (4) zwei Führungsflächen (9) aufweist, die eben sind und die in einem spitzen Winkel zu einer Flächennormalen des Zahnsegments (3) ausgerichtet sind, und wobei an beiden Seiten der Zahnstange (4) jeweils wenigstens eine Führungsrolle (11, 20) vorgesehen ist, die in Anlage mit den Führungsflächen (9) stehen, wobei die beiden Führungsrollen (11, 20) jeweils auf einer linken und rechten Seite des Ritzels, von einem Verzahnungseingriffspunkt mit der Zahnstange gesehen, vorgesehen sind, **dadurch gekennzeichnet, dass** die Drehachsen (7) der Führungsrollen (11, 20) in einem Winkel von 0° bis 20° gegenüber der Flächennormalen ausgerichtet sind.

2. Zahnstangenlenkung nach Anspruch 1, **dadurch gekennzeichnet, dass** auf einer linken und/oder rechten der jeweiligen Führungsrolle (11) gegenüberliegen Seite eine weitere Führungsrolle (20) vorgesehen ist.

3. Zahnstangenlenkung nach einem der vorhergehenden Ansprüche,
**dadurch gekennzeichnet, dass** die Zahnstange (4) in Richtung ihrer Längsachse (5) in einem Abstand von dem Verzahnungseingriff in den Führungsrollen (11) geführt ist.

4. Zahnstangenlenkung nach einem der vorhergehenden Ansprüche,
**dadurch gekennzeichnet, dass** die Führungsrollen (11) als Kegelrollen ausgeführt sind.

5. Zahnstangenlenkung nach Anspruch 4, **dadurch gekennzeichnet, dass** insbesondere zusätzlich der Kegelwinkel der Kegelrollen zwischen 3° und 40° ausgeführt ist.

6. Zahnstangenlenkung nach einem der vorhergehenden Ansprüche,
**dadurch gekennzeichnet, dass** die Lagerachsen (7) der Führungsrollen (11) von Lagerzapfen (8) gebildet sind, in ihrer Position einstellbar sind.

7. Zahnstangenlenkung nach Anspruch 6, **dadurc**h **gekennzeichnet,** dass die Lagerzapfen (8) über ein Schraubgewinde (14) in Achsrichtung positionierbar sind.

8. Zahnstangenlenkung nach Anspruch 4, **dadurch gekennzeichnet, dass** die Kegelrollen über Anlaufscheiben (17) axial abgestützt sind.

9. Zahnstangenlenkung nach Anspruch 8, **dadurch gekennzeichnet, dass** die Anlaufscheiben (17) als Tellerfedern ausgelegt sind.

10. Zahnstangenlenkung nach Anspruch 8, **dadurch gekennzeichnet, dass** die Anlaufscheiben (17) mit Federmitteln (18) versehen sind, die die Führungsrollen (11) in Axialrichtung vorspannen.

11. Zahnstangenlenkung nach einem der vorhergehenden Ansprüche,
**dadurch gekennzeichnet, dass** drei Führungsrollen (11, 20) vorgesehen sind, wobei zwei Führungsrollen (11) bezüglich der Zahnstange (4) einander gegenüber liegend angeordnet sind und eine weitere Führungsrolle (20) an einer Seite der Zahnstange (4) in einem Abstand von den Führungsrollen (11) bezüglich der Axialrichtung der Zahnstange vorgesehen ist.

12. Zahnstangenlenkung nach einem der vorhergehenden Ansprüche,
**dadurch gekennzeichnet, dass** das Lenkritzel (2) zwischen den Führungsrollen (11) und der dritten Führungsrolle (20) angeordnet ist.

13. Zahnstangenlenkung nach einem der vorhergehenden Ansprüche,
**dadurch gekennzeichnet, dass** das Lenkritzel (2) zwischen den Führungsrollen (11) angeordnet ist.

14. Zahnstangenlenkung nach Anspruch 4, **dadurch gekennzeichnet, dass** die Erzeugende der Mantelfläche der Kegelrollen (11) konvex ausgeführt ist.

15. Zahnstangenlenkung nach einem der vorhergehenden Ansprüche,
**dadurch gekennzeichnet, dass** die Oberfläche der Führungsflächen (9)in Bezug auf die Kontaktfläche zwischen Führungsfläche (9) und Rollenumfangsfläche der Rolle (11) konvex ausgeführt ist.

## Claims

1. Rack-and-pinion steering system for a vehicle having a steering housing (1), in which a steering pinion (2) is rotatably mounted and is in engagement with a toothed segment (3) of a steering rack (4) displaceably mounted in the steering housing (1) in the direction of a longitudinal axis (5), wherein the toothed segment (3) forms a flat surface with the upper side thereof facing the steering pinion (2), wherein the steering rack (4) has two guide surfaces (9), which are flat and which are aligned at an acute angle to a surface normal of the toothed segment (3) and wherein at least one guide roller (11, 20) is in each case provided on both sides of the steering rack (4), which guide rollers are in abutment with the guide surfaces (9), wherein both guide rollers (11, 20) are in each case provided on a left and right side of the pinion, viewed from a toothed engagement point with the steering rack, **characterised in that** the rotary axes (7) of the guide rollers (11, 20) are aligned at an angle of 0° to 20° with respect to the surface normal.

2. Rack-and-pinion steering system according to claim 1, **characterised in that** a further guide roller (20) is provided on a left and/or right side opposite the respective guide roller (11).

3. Rack-and-pinion steering system according to any one of the preceding claims, **characterised in that** the steering rack (4) is guided into the guide rollers (11) in the direction of the longitudinal axis (5) thereof at a distance from the toothed engagement.

4. Rack-and-pinion steering system according to any one of the preceding claims, **characterised in that** the guide rollers (11) are configured as tapered rollers.

5. Rack-and-pinion steering system according to claim 4, **characterised in that** the taper angle of the tapered rollers is, in particular also configured between 3° and 40°.

6. Rack-and-pinion steering system according to any one of the preceding claims, **characterised in that** the bearing axes (7) of the guide rollers (11) are formed by bearing pins (8) and are adjustable in the position thereof.

7. Rack-and-pinion steering system according to claim 6, **characterised in that** the bearing pins (8) are positionable via a screw thread (14) in the axial direction.

8. Rack-and-pinion steering system according to claim 4, **characterised in that** the tapered rollers are axially supported via thrust washers (17).

9. Rack-and-pinion steering system according to claim 8, **characterised in that** the thrust washers (17) are designed as plate springs.

10. Rack-and-pinion steering system according to claim 8, **characterised in that** the thrust washers (17) are provided with spring means (18), which pre-tension the guide rollers (11) in the axial direction.

11. Rack-and-pinion steering system according to any one of the preceding claims, **characterised in that** three guide rollers (11, 20) are provided, wherein two guide rollers (11) are arranged opposing each other with respect to the steering rack (4) and a further guide roller (20) is provided on one side of the steering rack (4) at a distance from the guide rollers (11) with respect to the axial direction of the steering rack.

12. Rack-and-pinion steering system according to any one of the preceding claims, **characterised in that** the steering pinion (2) is arranged between the guide rollers (11) and the third guide roller (20).

13. Rack-and-pinion steering system according to any one of the preceding claims, **characterised in that** the steering pinion (2) is arranged between the guide rollers (11).

14. Rack-and-pinion steering system according to claim 4, **characterised in that** the generator of the lateral surface of the tapered rollers (11) is configured in a convex shape.

15. Rack-and-pinion steering system according to any one of the preceding claims, **characterised in that** the top surface of the guide surfaces (9) with respect to the contact surface between guide surface (9) and roller circumferential surface of the roller (11) is configured in a convex shape.

## Revendications

1. Direction à crémaillère pour un véhicule automobile comprenant un boîtier de direction (1), dans lequel un pignon de direction (2) est monté de manière à pouvoir tourner et s'engrène avec un segment denté (3) d'une crémaillère (4) montée de manière à pouvoir être déplacée par coulissement dans le boîtier de direction (1) en direction d'un axe longitudinal (5), où le segment denté (3) forme, avec son côté supérieur tourné vers le pignon de direction (2), une surface plane, où la crémaillère (4) comporte deux surfaces de guidage (9) planes et orientées selon un angle aigu par rapport à une normale à la surface du segment denté (3), et où au moins un galet de guidage (11, 20), en contact avec les surfaces de guidage (9), est respectivement agencé sur les deux côtés de la crémaillère (4), les deux galets de guidage (11, 20) étant agencés respectivement sur un côté gauche et droit du pignon, vus depuis un point d'engrènement de la denture avec la crémaillère, **caractérisé en ce que** les axes de rotation (7) des galets de guidage (11, 20) sont orientés selon un angle de 0° à 20° par rapport à une normale.

2. Direction à crémaillère selon la revendication 1, **caractérisé en ce que** l'on prévoit un autre galet de guidage (20) sur un côté opposé gauche et/ou droit du galet de guidage respectif (11).

3. Direction à crémaillère selon une des revendications précédentes, **caractérisé en ce que** la crémaillère (4) est guidée, en direction de son axe longitudinal (5), dans les galets de guidage (11) à une certaine distance de l'engrènement de la denture.

4. Direction à crémaillère selon une des revendications précédentes, **caractérisé en ce que** les galets de guidage (11) sont conçus en tant que rouleaux coniques.

5. Direction à crémaillère selon la revendication 4, **caractérisé en ce que** notamment l'angle conique des rouleaux coniques se situe entre 3° et 40°.

6. Direction à crémaillère selon une des revendications précédentes, **caractérisé en ce que** les axes de palier (7) des galets de guidage (11) sont formés par des tourillons de palier (8), et leur position est susceptible de pouvoir être réglée.

7. Direction à crémaillère selon la revendication 6, **caractérisé en ce que** les tourillons de palier (8) sont susceptibles de pouvoir être positionnés à l'aide d'un filet de vis (14) en direction axiale.

8. Direction à crémaillère selon la revendication 4, **caractérisé en ce que** les rouleaux coniques sont soutenus axialement à l'aide de rondelles de butée (17).

9. Direction à crémaillère selon la revendication 8, **caractérisé en ce que** les rondelles de butée (17) sont conçues en tant que rondelle Belleville.

10. Direction à crémaillère selon la revendication 8, **caractérisé en ce que** les rondelles de butée (17) sont pourvus de moyens formant ressort (18) qui sollicitent les galets de guidage (11) en direction axiale.

11. Direction à crémaillère selon une des revendications précédentes, **caractérisé en ce que** l'on prévoit trois galets de guidage (11, 20), où deux galets de guidage (11) sont agencés opposés l'un à l'autre par rapport à la crémaillère (4) et que l'on prévoit un autre galet de guidage (20) sur un côté de la crémaillère (4) à une certaine distance des galets de guidage (11) par rapport à la direction axiale de la crémaillère.

12. Direction à crémaillère selon une des revendications précédentes, **caractérisé en ce que** le pignon de direction (2) est agencé entre les galets de guidage (11) et le troisième galet de guidage (20).

13. Direction à crémaillère selon une des revendications précédentes, **caractérisé en ce que** le pignon de direction (2) est agencé entre les galets de guidage (11).

14. Direction à crémaillère selon la revendication 4, **caractérisé en ce que** la génératrice de la surface enveloppante des rouleaux coniques (11) est conçue de sorte à être convexe.

15. Direction à crémaillère selon une des revendications précédentes, **caractérisé en ce que** le côté supérieur des surfaces de guidage (9) est conçu de sorte à être convexe par rapport à la surface de contact entre la surface de guidage (9) et la surface périphérique des rouleaux du galet (11).
